# EUROPEAN PATENT APPLICATION

(11) **EP 4 811 445 A1**
(43) Date of publication of application: **23.09.2026**
(21) Application number: 24908091.2
(22) Date of filing: 18.12.2024
(51) Int. Cl.: H01M 4/36, H01M 4/38, H01M 4/485, H01M 10/0525, H01M 4/02

(54) **NEGATIVE ELECTRODE MATERIAL FOR LITHIUM SECONDARY BATTERY AND SECONDARY BATTERY COMPRISING SAME**

(30) Priority: 18.12.2023 KR 20230185203; 30.09.2024 KR 20240132568
(71) Applicant: POSCO Silicon Solution Co., Ltd, Pohang-si Gyeongsangbuk-do 37948 (KR)
(72) Inventor: CHO, Moon-Kyu, Pohang-si, Gyeongsangbuk-do 37948 (KR); CHOI, Sun-Ho, Pohang-si, Gyeongsangbuk-do 37948 (KR); CHEON, Jung-Hoon, Pohang-si, Gyeongsangbuk-do 37948 (KR)
(74) Representative: Lorenz Seidler Gossel Part. mbB
(86) International application number: PCT/KR2024/020649
(87) International publication number: WO 2025/135808

(57) **Abstract**

The present disclosure relates to a negative electrode material for a secondary battery and a secondary battery comprising the same. The negative electrode material for a secondary battery according to the present disclosure comprises a silicon-based core and a carbon coating layer located on the surface of the silicon-based core, and may have a high output, excellent cycle characteristics, and uniform electrochemical characteristics.

## Description

### Technical Field

The present disclosure relates to a negative electrode material for a secondary battery and a secondary battery comprising the same.

### Background Art

In various industrial sectors such as electronics, electric vehicles (EVs), energy storage systems (ESS), and aerospace/drones, there is a growing demand for secondary batteries with high energy density and high power density, as well as long capacity retention.

Generally, secondary batteries consist of a positive electrode, a negative electrode, an electrolyte, and a separator. Among these, graphite is the most commonly used negative electrode material in commercial applications; however, its theoretical maximum capacity is only 372 mAh/g.

To develop high-energy-density secondary battery, research has been continuously conducted to use chalcogenide-based materials such as sulfur (maximum capacity: 1,675 mAh/g, silicon-based materials such as silicon (maximum capacity: 4,200 mAh/g) or silicon oxides (maximum capacity: 1,500 mAh/g), and transition metal oxides as negative electrode materials for secondary batteries. Among various materials, silicon-based negative electrode materials are attracting the most attention due to their high theoretical capacity, low reaction potential with lithium, and eco-friendly nature.

However, when particulate silicon is used as the negative electrode material, repeated charge/discharge cycling causes the battery's performance to deteriorate rapidly due to insulation issues resulting from the silicon's significant volume changes, particle shedding, and increased contact resistance, ultimately leading to the loss of the battery's performance. Meanwhile, in the case of silicon oxides, lithium is lost due to irreversible products such as lithium silicate and lithium oxide, leading to a sharp decline in initial coulombic efficiency.

To solve the problems of such silicon-based negative electrode materials, a negative electrode material is disclosed in which a carbon coating layer is formed on the surface of a metal-doped silicon oxide negative electrode material through chemical vapor deposition (CVD). However, this negative electrode material requires the use of expensive hydrocarbon gases, and its conversion efficiency to carbon is low within the temperature range that inhibits silicon crystal growth, making it economically unfeasible. In addition, it is difficult to uniformly coat the surfaces of silicon oxide particles with this negative electrode material during mass production.

Furthermore, the CVD coating process has a feature in which hydrocarbon gas is continuously supplied from the outside and heat is supplied through the outer wall of the reactor, so a temperature gradient inevitably occurs inside the reactor. Furthermore, since the hydrocarbon decomposition reaction is endothermic, the temperature gradient increases as the silicon oxide particles move away from the heat source, resulting in a decrease in the uniformity of the deposited carbon coating layer.

The non-uniformity of this carbon coating layer leads to non-uniformity in the electrochemical properties of the negative electrode material, which has an undesirable effect on the initial coulombic efficiency, cycle characteristics, and capacity retention. Therefore, there remains a need to develop silicon-based negative electrode materials for secondary batteries that exhibit excellent initial coulombic efficiency, cycle characteristics, and capacity retention, as well as high-power characteristics.

### Disclosure of Invention

### Technical Problem

In one aspect of the present disclosure, a negative electrode material for a secondary battery having improved initial coulombic efficiency, cycle characteristics, and capacity retention, and a secondary battery comprising the same may be provided.

In one aspect of the present disclosure, a negative electrode material for a secondary battery and a secondary battery comprising the same may be provided, in which the electrochemical properties between the negative electrode particles are not only uniform but also the electrochemical properties within the negative electrode particles are uniform.

The scope of the present disclosure is not limited to the foregoing. A person skilled in the art to which the present disclosure pertains will have no difficulty in understanding additional objectives of the present disclosure from the overall content of this specification.

### Solution to Problem

A negative electrode material for a secondary battery according to one embodiment of the present disclosure comprises: a silicon-based core; and a carbon coating layer disposed on a surface of the silicon-based core, wherein an intensity ratio (I_{D}/I_{G}) of a D-band peak to a G-band peak in a Raman spectrum is less than a full width at half maximum (FWHM) ratio (F_{D}/F_{G}) of the D-band peak to the G-band peak, wherein the FWHM ratio (F_{D}/F_{G}) is 1.3 or more, and wherein the silicon-based core exhibits Type II behavior in a nitrogen adsorption-desorption isotherm graph.

The negative electrode material for a secondary battery according to one embodiment, wherein an area (A₁) of a peak of a first wavenumber (n₁) in a range of 1400 to 1625±5 cm⁻¹ in an infrared spectrum of the negative electrode material is smaller than an area (A₂) of a peak of a second wavenumber (n₂) in a range of 1625±5 to 2100 cm⁻¹.

The negative electrode material for a secondary battery according to one embodiment, wherein a ratio (A₂/A₁) of the area (A₂) of the peak of the second wavenumber (n₂) to the area (A₁) of the peak of the first wavenumber (n₁) is 2 or more.

The negative electrode material for a secondary battery according to one embodiment, wherein the intensity ratio (I_{D}/I_{G}) is less than 1.3.

The negative electrode material for a secondary battery according to one embodiment, wherein the FWHM (F_{G}) of the G-band peak is 60 cm⁻¹ or more.

The negative electrode material for a secondary battery according to one embodiment, wherein the silicon-based core comprises a matrix comprising silicon oxide; and silicon nanocrystals dispersedly embedded in the matrix.

The negative electrode material for a secondary battery according to one embodiment, wherein the negative electrode material satisfies the following Equation 1 based on a silicon Raman signal:

$1 > WN \left(Si\right) / WN \left(ref\right)$
wherein, in Equation 1, WN(ref) is a center wavenumber of a Raman peak of bulk single-crystal silicon, and WN(Si) is a center wavenumber of a Raman peak of the silicon nanocrystals included in the negative electrode material.

The negative electrode material for a secondary battery according to one embodiment, wherein a full width at half maximum (FWHM) of a silicon Raman peak of the nanocrystals included in the negative electrode material is larger than an FWHM of the Raman peak of the bulk single-crystal silicon.

The negative electrode material for a secondary battery according to one embodiment, wherein a full width at half maximum (FWHM) of a Raman peak of nanoparticulate-phase silicon included in the negative electrode material is 4 to 20 cm⁻¹.

The negative electrode material for a secondary battery according to one embodiment, wherein, in the silicon-based core, a difference between a maximum value and a minimum value of the center wavenumber WN(Si) of the Raman peak of the silicon nanocrystals at 10 random and different locations is 5 cm⁻¹ or less.

The negative electrode material for a secondary battery according to one embodiment, wherein a specific surface area of the negative electrode material is 10 m²/g or less.

The negative electrode material for a secondary battery according to one embodiment, wherein the FWHM ratio (F_{D}/F_{G}) is 1.5 or more.

The negative electrode material for a secondary battery according to one embodiment, wherein the carbon coating layer comprises a plurality of carbon nanoparticles.

The negative electrode material for a secondary battery according to one embodiment, wherein the carbon coating layer comprises a dispersed phase comprising a plurality of carbon nanoparticles; and a continuous phase consisting of carbon and physically binding the dispersed phase.

The negative electrode material for a secondary battery according to one embodiment, wherein the carbon coating layer is included in an amount of 0.5 to 8 wt% based on a total weight of the negative electrode material.

The negative electrode material for a secondary battery according to one embodiment, wherein the carbon coating layer is derived from coal tar or petroleum-based residue.

The negative electrode material for a secondary battery according to one embodiment, wherein a D₁ particle size of the negative electrode material is 0.8 to 5 um, and D₁₀/D₁ is 1 to 3.

The negative electrode material for a secondary battery according to one embodiment, wherein a D₉₀ particle size of the negative electrode material is 8.5 to 25 um, and D₉₉/D₉₀ is 1.1 to 3.

A secondary battery according to one embodiment of the present disclosure may include the negative electrode material for a secondary battery described above.

### Advantageous Effects of Invention

A negative electrode material for a secondary battery according to one embodiment of the present disclosure has a high initial capacity and may have excellent initial coulombic efficiency and capacity retention.

A negative electrode material for a secondary battery according to one embodiment of the present disclosure has uniform electrochemical properties at any position within a single negative electrode particle, and furthermore, may have uniform electrochemical properties between negative electrode particles.

### Brief Description of Drawings

FIG. 1 is a graph showing a Raman spectrum of a negative electrode material for a secondary battery according to an embodiment of the present disclosure.
FIG. 2 is a graph showing a Raman spectrum of a negative electrode material for a secondary battery according to a comparative example.
FIG. 3 is a graph showing a silicon Raman spectrum of a negative electrode material for a secondary battery according to one embodiment of the present disclosure.
FIG. 4 is a graph of a nitrogen adsorption-desorption isotherm of a silicon-based core of a negative electrode material for a secondary battery according to one embodiment of the present disclosure.
FIG. 5 is a graph showing an infrared spectrum of a negative electrode material for a secondary battery according to one embodiment of the present disclosure.

### Mode for Carrying out the Invention

Hereinafter, The following describes preferred embodiments of the present disclosure with reference to the attached drawings. However, the embodiments of the present disclosure may be modified in various ways, and the scope of the present disclosure is not limited to the embodiments described below.

In addition, the embodiments of the present disclosure are provided to more fully explain the present disclosure to those of ordinary skill in the art.

The shapes and sizes of elements in the drawings may be exaggerated for a clearer explanation.

In describing the embodiments of the present disclosure, detailed descriptions of prior art related to the present disclosure will be omitted where it is deemed that such descriptions might unnecessarily obscure the essence of the present disclosure. Furthermore, the terms described below are defined in light of their functions in the present disclosure and may vary depending on the intent of a user or an operator, or on established conventions. Therefore, the definition should be determined based on the content throughout this specification. The terms used in the detailed description are intended solely to describe embodiments of the present disclosure and should in no way be construed as limiting. Unless otherwise specified, expressions in the singular form include the plural form.

In this description, terms such as "including" or "comprising" are intended to refer to certain characteristics, numbers, steps, actions, elements, or parts thereof or combinations thereof, and should not be construed as excluding the existence or possibility of one or more other characteristics, numbers, steps, actions, elements, or parts thereof or combinations thereof in addition to those described.

Unless otherwise specified in the specification of the present disclosure, the unit "%" refers to weight percent (wt%).

In this specification, terms such as "top", "upper", "upper surface", "lower", "lower surface", and "side" are based on the drawings and may actually vary depending on the direction in which the elements or components are arranged.

In addition, throughout this specification, when it is stated that a certain part is "connected" to another part, this includes not only cases where they are "directly connected," but also cases where they are "indirectly connected" through other elements in between.

The present disclosure will be described in detail below with reference to various embodiments or examples of the disclosure. It should be noted that each embodiment or example described in this specification is not limited to a single embodiment or example, but may also be combined with other embodiments or examples. Therefore, the citation of a claim in the scope of the patent claims is merely an example of an embodiment; the technical concept of the present disclosure should not be interpreted solely in combination with the cited claim, but combinations with various other claims also fall within the scope of the technical concept of the present disclosure.

In this specification, the particle size distribution refers to a measurement obtained using a laser diffraction method. In order to analyze the particle size distribution, in the present disclosure, a powder to be measured is dispersed in a dispersion medium, the powder to be measured is introduced into a laser diffraction particle size measuring device, and the particle size distribution is calculated by measuring a difference in diffraction patterns according to particle size as the particles pass through a laser beam.

The applicant discovered that in a negative electrode material for a secondary battery in which a carbon coating layer is formed on a silicon oxide, the mechanical and electrochemical properties of the negative electrode material are significantly affected by Raman spectroscopic characteristics. Based on these findings, further research was conducted, and the present disclosure was completed by discovering that in a negative electrode material having a carbon coating layer disposed on a silicon-based core, the electrochemical properties of the negative electrode material are significantly improved when the Raman spectrum of the negative electrode material satisfies a specific pattern and the nitrogen adsorption-desorption isotherm graph of the silicon-based core exhibits a specific behavior.

In the present disclosure, the negative electrode material for a secondary battery includes a negative electrode material for a lithium secondary battery, but is not necessarily limited thereto. The negative electrode material of the present disclosure may also be used as an active material in secondary batteries such as sodium batteries, aluminum batteries, magnesium batteries, calcium batteries, and zinc batteries.

A negative electrode material for a secondary battery according to the present disclosure comprises: a silicon-based core; and a carbon coating layer disposed on a surface of the silicon-based core, wherein an intensity ratio (I_{D}/I_{G}) of a D-band peak to a G-band peak in a Raman spectrum is less than a full width at half maximum (FWHM) ratio (F_{D}/F_{G}) of the D-band peak to the G-band peak, wherein the FWHM ratio (F_{D}/F_{G}) is 1.3 or more, and wherein the silicon-based core exhibits Type II behavior in a nitrogen adsorption-desorption isotherm graph.

Specifically, in the Raman spectrum of the negative electrode material, the D-band peak intensity (I_{D}) is a maximum intensity of the peak located in a wavenumber region of 1310 to 1380 cm⁻¹, and the G-band peak intensity (I_{G}) is a maximum intensity of the peak located in a wavenumber region of 1560 to 1630 cm⁻¹ in the same Raman spectral analysis. Although not strictly limited thereto, for experimental purposes, the Raman spectrum may have been measured at room temperature and under ambient conditions using a Raman spectrometer (WITec GmbH) with a 532 nm laser.

The FWHM(Full Width at Half Maximum) is a width of a spectrum measured at half a maximum height of each spectral peak (D-band peak and G-band peak) measured from a baseline of the Raman spectrum, after performing peak deconvolution of the D-band peak and G-band peak.

The infrared spectrum may be obtained by Fourier transform infrared spectroscopy (FTIR). An infrared spectrum comprises a spectrum with a wavenumber of incident infrared light on one axis and a transmittance as a function of wavenumber on the other axis; the transmittance on the other axis includes a value of 100% transmittance, which corresponds to a case where all light of a specific wavenumber being irradiated is transmitted, and peaks on an FTIR spectrum may include peaks in a direction of decreasing transmittance.

The nitrogen adsorption-desorption isotherm graph for the silicon-based core refers to an isotherm that combines an isotherm of a nitrogen adsorption process (nitrogen adsorption isotherm) and an isotherm of a nitrogen desorption process (nitrogen desorption isotherm), both of which are obtained from nitrogen adsorption measurements. On the isotherm shown above, a relative nitrogen pressure (P/P0) is plotted on an x-axis, and a nitrogen adsorption capacity (cm³/g STP) is plotted on a y-axis; this nitrogen adsorption-desorption isotherm can be measured using a BET specific surface area analyzer (Micromeritics, ASAP 2020 PLUS). The behavior of Type II described above is defined according to the classification standardized by the IUPAC (International Union of Pure and Applied Chemistry).

Thus, silicon-based negative electrode materials for secondary batteries that exhibit the characteristics described above in Raman spectra and nitrogen adsorption-desorption isotherm graphs feature a silicon core and a carbon coating layer that are much more organically combined than in conventional silicon-based negative electrode materials known in the industry. This allows them to maintain excellent ionic conductivity while effectively dispersing stress caused by a volume change of silicon. Such silicon-based negative electrode materials for secondary batteries may offer overall improvements in capacity, cycle life, and charge/discharge performance.

In one embodiment, an area (A₁) of a peak of a first wavenumber (n₁) in a range of 1400 to 1625±5 cm⁻¹ in an infrared spectrum of the negative electrode material may be smaller than an area (A₂) of a peak of a second wavenumber (n₂) in a range of 1625±5 to 2100 cm⁻¹.

The infrared spectrum may be obtained by Fourier transform infrared spectroscopy (FTIR). In an infrared spectrum, the first and second wavenumbers refer to specific ranges of wavenumbers, and a point at which the first and second wavenumbers are separated may be defined as a position where the peaks separate from one another near 1625±5 cm⁻¹. For example, when the infrared spectrum has one or more peaks in a wavenumber range below 1625 cm⁻¹ while converging at 1625 cm⁻¹, and has one or more peaks in a wavenumber range above 1625 cm⁻¹ while similarly converging at 1625 cm⁻¹, the 1625 cm⁻¹ may be defined as the position distinguishing the peak of the first wavenumber from the peak of the second wavenumber.

The peak area may be derived using a direct integration method. For example, the area (A₁) of the peak of the first wavenumber (n₁) in the range of 1400 to 1625 cm⁻¹ may be defined as an area of a region enclosed by a straight line connecting spectral positions at 1400 cm⁻¹ and 1625 cm⁻¹ and a curve of the infrared spectrum. Similarly, the area (A₂) of the peak of the second wavenumber (n₂) in the range of 1625 to 2100 cm⁻¹ may be defined as an area of a region enclosed by a straight line connecting points at 1625 cm⁻¹ and 2100 cm⁻¹ and the infrared spectral curve.

In the infrared spectrum, the area (A₁) of the peak of the first wavenumber (n₁) is not particularly limited as long as it is smaller than the area (A₂) of the peak of the second wavenumber (n₂). Without limitation, the ratio (A₂/A₁) of the area (A₂) of the peak of the second wavenumber (n₂) to the area (A₁) of the peak of the first wavenumber (n₁) may be 2 or more or 3 or more, and specifically may be 2.5 to 10, or more specifically 3 to 7.

In one embodiment, the intensity ratio (I_{D}/I_{G}) in the Raman spectrum may be less than the FWHM ratio (F_{D}/F_{G}). Specifically, the intensity ratio (I_{D}/I_{G}) may be less than 1.3, 1.25 or less, 1.2 or less, 1.15 or less, or 1.13 or less, and may be 0.5 or more, without limitation. Furthermore, the intensity ratio (I_{D}/I_{G}) may specifically be 0.5 or more but less than 1.3, 0.5 to 1.25, 0.6 to 1.2, or 0.7 to 1.15. The FWHM ratio (F_{D}/F_{G}) may be 1.3 or more, 1.4 or more, 1.5 or more, or 1.7 or more, and may be 2.5 or less, without limitation. Specifically, the FWHM ratio (F_{D}/F_{G}) may be 1.3 to 2.5, 1.4 to 2.5, 1.5 to 2.5, 1.6 to 2.3, or 1.7 to 2.1.

In one embodiment, the intensity ratio (I_{D}/I_{G}) in the Raman spectrum is 0.5 to 1.25 and the FWHM ratio (F_{D}/F_{G}) is 1.3 to 2.5, the intensity ratio (I_{D}/I_{G}) is 0.6 to 1.2 and the FWHM ratio (F_{D}/F_{G}) is 1.5 to 2.1, or the intensity ratio (I_{D}/I_{G}) is 0.7 to 1.15 and the FWHM ratio (F_{D}/F_{G}) is 1.7 to 2.1.

Thus, the negative electrode material for a secondary battery that exhibits the characteristics described above in the Raman and infrared spectra not only features a silicon-based core and a carbon coating layer that are much more organically combined than those of silicon-based negative electrode materials known in the art, but also possesses superior carbon coating layer quality. Consequently, the negative electrode material for a secondary battery according to the present disclosure exhibits significantly improved electrochemical properties, resulting in excellent initial coulombic efficiency, cycle characteristics, and capacity retention.

In one embodiment, the FWHM (F_{G}) of the G-band peak may be 60 cm⁻¹ or more, 80 cm⁻¹ or more, 90 cm⁻¹ or more, 95 cm⁻¹ or more, or 100 cm⁻¹ or more, and may non-limitingly be 130 cm⁻¹ or less. More specifically, the FWHM (F_{G}) of the G-band peak may be 60 to 130 cm⁻¹, 80 to 120 cm⁻¹, or 95 to 110 cm⁻¹.

In one embodiment, the specific surface area of the negative electrode material according to the present disclosure may be 10 m²/g or less, specifically 5 m²/g or less, and more specifically 0.5 to 5 m²/g. Accordingly, the negative electrode material for a secondary battery according to the present disclosure is capable of suppressing irreversible side reactions, and it may exhibit improved electrical properties by reducing the adsorption of an electrode binder.

The silicon-based core may include silicon in its elemental form and in the form of an oxide. In this context, the term "silicon in the oxide state" may refer to silicon alone in the oxide state. Silicon oxide may satisfy the formula SiOₓ (where x is a real number more than 0.1 and less than 2, specifically more than 0.3 and less than 1.8), and the silicon oxide may include a first silicon oxide and a second silicon oxide having different values of x.

In one embodiment, the silicon-based core may include a silicon oxide matrix and silicon nanocrystals dispersedly embedded in the matrix. However, the present disclosure does not preclude embodiments in which the silicon-based core comprises only the silicon oxide matrix and substantially no silicon nanocrystals.

In one embodiment, the silicon-based core may include the silicon nanocrystals in an amount of 1 to 70 wt%, 2 to 60 wt%, 5 to 50 wt%, or 10 to 50 wt% based on the total weight of the silicon-based core. In addition, the silicon-based core may include a residual silicon oxide matrix.

The silicon oxide matrix may refer to a solid-state medium in which the silicon nanocrystals are dispersedly embedded. Furthermore, the silicon oxide matrix may refer to a material that forms a continuous phase as opposed to a dispersed phase of the silicon nanocrystals in the negative electrode material. In this specification, the matrix may refer to the material in the negative electrode material composition excluding the silicon (Si) nanocrystals.

For example, the silicon oxide matrix may include a silicon oxide, and the silicon oxide may satisfy the formula SiO_{y} (where y is a real number less than 2; specifically, a real number between 0.1 and 1.8; more specifically, a real number between 0.1 and 1.5).

The silicon oxide matrix may be crystalline, amorphous, or a composite phase in which crystalline and amorphous phases are mixed. More specifically, the silicon oxide matrix may be crystalline or a composite phase consisting of both crystalline and amorphous phases. Furthermore, the silicon of the silicon oxide matrix may include silicon with a valence corresponding to one or more combinations selected from the group consisting of Si¹⁺, Si²⁺, Si³⁺, and Si⁴⁺.

The silicon nanocrystals may have a size (diameter) that typically falls within a range defined as nanocrystals. The silicon nanocrystals may have diameters of substantially 100 nm or less, 50 nm or less, 20 nm or less, or 15 nm or less. For example, the silicon nanocrystals may have diameters of 1 to 20 nm, 1 to 15 nm, or 1 to 10 nm. The size of the silicon nanocrystals may be calculated by substituting the FWHM of the Si (220) crystal plane, as measured by X-ray diffraction, into the Scherrer equation.

The carbon coating layer refers to a carbon film disposed on a surface of the silicon-based core. The carbon coating layer protects the silicon-based core and suppresses volume changes in the silicon of the core; despite its near-amorphous nature, it provides excellent conductivity and electrochemical properties.

In one embodiment, the carbon coating layer may be an amorphous carbon layer. The amorphous carbon layer reliably coats the surface of the silicon-based core, thereby preventing volume changes in the silicon.

In one embodiment, the carbon coating layer may be included in an amount of 0.5 to 8 wt%, specifically 0.5 to 6 wt%, based on a total weight of the negative electrode material.

Although the thickness of the carbon coating layer is not specifically limited, the average thickness of the carbon coating layer may be 1 to 200 nm, 1 to 150 nm, 1 to 100 nm, 2 to 50 nm, 3 to 30 nm, or 5 to 15 nm. For experimental purposes, the thickness of the carbon coating layer may be determined by measuring the thickness at 10 or more randomly selected locations-typically between 10 and 20 locations-using images obtained via transmission electron microscopy (TEM) and scanning transmission electron microscopy (STEM), and then calculating the average value. Within the above range, it is possible to reliably wrap the surface of the silicon-based core while minimizing the electrical resistance.

In one embodiment, the carbon coating layer may comprise a plurality of carbon nanoparticles. The carbon nanoparticles may be located, at least in part, in one or more regions selected from the group consisting of the interior and the surface of the carbon coating layer.

Specifically, the carbon coating layer may comprise a dispersed phase and a continuous phase. Within the carbon coating layer, the plurality of carbon nanoparticles may form the dispersed phase, and the continuous phase consisting of carbon may physically bind the dispersed phase. Although the dispersed phase and the continuous phase are both composed of carbon, they may be distinguished as different phases within the carbon coating layer. For example, when observed using a scanning electron microscope (SEM), the dispersed phase may be identified in images obtained from fracture surface analysis of the negative electrode material.

The carbon nanoparticles may be primary carbon particles of carbon or secondary particles formed by the aggregation of the primary carbon particles, and the carbon coating layer may include the primary carbon particles, the secondary particles, or a mixture thereof.

Specifically, the carbon nanoparticles may be embedded within the carbon coating layer in contact with the silicon-based core; they may be in contact with the silicon-based core with a portion protruding from a surface of the carbon coating layer; they may be partially embedded within the carbon coating layer with a remaining portion protruding from the surface of the carbon coating layer; or they may be bonded to the surface of the carbon coating layer.

Thus, the carbon coating layer including the carbon nanoparticles described above may improve electrical conductivity of an exposed surface and suppress side reactions with an electrolyte. In addition, resistance(contact resistance) between particles of the negative electrode material may be reduced, and stable and smooth electrical contact between the particles of the negative electrode material may be maintained.

The carbon nanoparticles described above may be spherical or ellipsoidal, but are not limited to any specific shape; specifically, they may have a spherical bead shape. A median particle size of the carbon nanoparticles is not specifically limited, but may range from 2 nm to 1 µm, specifically from 5 to 0.5 µm, and more specifically from 5 to 200 nm. Since these carbon nanoparticles are relatively coarse compared to a thickness of the carbon coating layer, they may provide stable contact between the negative electrode material even when the negative electrode material undergoes volume changes due to silicon. In this case, an area fraction of the particulate negative electrode material occupied by the carbon nanoparticles may be 30% or more, specifically 50% or more, and more specifically 70% or more but less than 100%. Experimentally, the area fraction occupied by the carbon nanoparticles is determined using images obtained via transmission electron microscopy (TEM) or scanning electron microscopy (SEM), by assuming a surface formed by completely enveloping the silicon-based core with a virtual film having the same thickness as the carbon coating layer but without the carbon nanoparticles, calculating a total surface area, and measuring an area occupied by the carbon nanoparticles on the virtual film.

Preferably, the carbon coating layer may be derived from a liquid carbon precursor. The liquid carbon precursor may refer to a carbon precursor that is in a liquid state at room temperature, such as 25 °C, and may be a polycyclic aromatic compound having an average molecular weight measured by MALDI-TOF of 100 to 2,000 Da, specifically 100 to 1,000 Da.

The carbon precursor may be a compound having a polycyclic aromatic structure with three or more aromatic rings. Specifically, it may be a polycyclic aromatic structure with 3 to 10 aromatic rings, but is not limited thereto.

In one non-limiting embodiment, the liquid carbon precursor may be coal tar or petroleum-based residue; more specifically, the liquid carbon precursor may be liquid coal tar.

The liquid coal tar may refer to coal tar that is naturally in a liquid state at room temperature (25 °C) and standard atmospheric pressure (1 atm), without the aid of chemicals such as solvents or the application of external energy such as heat.

Specifically, the liquid coal tar may have a specific gravity of 1.1 to 1.3 g/cc, more specifically 1.3 to 1.28 g/cc, and even more specifically 1.2 to 1.26 g/cc.

Furthermore, the liquid coal tar may have an initial boiling point (IBP) of 50 to 70 °C, 55 to 70 °C, 60 to 70 °C, or 65 to 70 °C. In this case, the IBP may have been measured in accordance with ASTM D86.

The liquid coal tar is advantageous not only because it may be uniformly coated onto a surface of the particles of the silicon-based core, but also because it may easily penetrate internal pores of the core particles.

In one embodiment, the negative electrode material for a secondary battery may satisfy Equation 1 based on a silicon Raman signal.$1 > WN \left(Si\right) / WN \left(ref\right)$

In Equation 1, WN(ref) is a center wavenumber of a Raman peak of bulk single-crystal silicon, and WN(Si) is a center wavenumber of a Raman peak of the silicon nanocrystals included in the negative electrode material.

Experimentally, the Raman spectrum of the silicon included in the negative electrode material may be measured under the following conditions: room temperature (20 to 25°C), atmospheric pressure, an excitation laser wavelength of 532 nm, a laser power of 0.5 mW, a spectrometer resolution of 1 cm⁻¹, 1 g of the negative electrode material, and a detector exposure time of 15 s.

A ratio (WN(Si)/WN(ref)) of the central wavenumber of the Raman peak of the silicon nanocrystals included in the negative electrode material to that of the bulk single-crystal silicon, as shown in Equation 1, is a parameter indicating the type and magnitude of residual stress remaining in the silicon nanocrystals dispersedly embedded within the matrix.

In Equation 1, the term "bulk single-crystal silicon" should be interpreted to mean silicon of a size at which physical properties of bulk single-crystal silicon are effectively manifested. In terms of providing clear comparison criteria and ensuring ease of purchase, the bulk single-crystal silicon may refer to monocrystalline silicon wafers with a thickness in a sub-millimeter order; for example, a thickness of 0.4 to 0.7 mm.

That WN(Si)/WN(ref) is less than 1 in Equation 1 indicates that, compared to the bulk single-crystal silicon, the central wavenumber of the Raman peak of the silicon nanocrystals included in the negative electrode material shifts toward a lower wavenumber, implying that the silicon nanocrystals possess residual tensile stress.

In Equation 1, the Raman peaks of silicon in the bulk single-crystal silicon and the silicon nanocrystals, respectively, appear in a 450 to 540 cm⁻¹, a 480 to 530 cm⁻¹, a 500 to 525 cm⁻¹, or a 510 to 520 cm⁻¹. The central wavenumber of the peak, that is, the wavenumber corresponding to the center of the peak, may refer to a wavenumber having a maximum intensity value in the peak. In this case, if there are two or more Raman peaks in the Raman shift region, the peak with the highest intensity may correspond to the Raman peak of silicon in Equation 1. If two or more Raman peaks overlap to form a doublet, the wavenumber with the maximum intensity in the peak with the higher intensity may correspond to the central wavenumber of the peak.

The FWHM of the Raman peak of the silicon nanocrystals included in the negative electrode material may be greater than that of the Raman peak of the bulk single-crystal silicon. The larger FWHM value compared to the bulk single-crystal silicon may be attributed to a structure in which the silicon included in the negative electrode material is dispersedly embedded in the matrix in the form of ultrafine nanocrystallites.

Specifically, the FWHM of the Raman peak of the silicon nanocrystals included in the negative electrode material may be 4 to 25 cm⁻¹, 5 to 22 cm⁻¹, 6 to 20 cm⁻¹, 6 to 18 cm⁻¹, or 8 to 15 cm⁻¹. In this case, the Raman peak of the silicon nanocrystals included in the negative electrode material may refer to a single peak rather than a deconvoluted peak.

The FWHM of the Raman peak of the nanoparticulate-phase silicon included in the negative electrode material may be larger than the FWHM of the Raman peak of bulk single-crystal silicon. The larger FWHM value compared to the bulk single-crystal silicon may be attributed to a structure in which the silicon included in the negative electrode material is dispersedly embedded in the matrix in the form of ultrafine nanocrystallites. Specifically, the FWHM of the Raman peak of the nanoparticulate-phase silicon included in the negative electrode material is 4 to 20 cm⁻¹, 6 to 20 cm⁻¹, 6 to 18 cm⁻¹, 6 to 16 cm⁻¹, 8 to 20 cm⁻¹, 8 to 18 cm⁻¹, 8 to 16 cm⁻¹, 10 to 20 cm⁻¹, 10 to 18 cm⁻¹, or 10 to 16 cm⁻¹, but is not necessarily limited thereto.

As described above, the silicon-based core refers to silicon oxide represented by SiOₓ (where x is a real number greater than 0.1 and less than 2, specifically greater than 0.3 and less than 1.8), and may be undoped with metals. Generally, it is well known that silicon oxide-based negative electrode materials are doped with metals such as lithium or magnesium to suppress the formation of lithium oxide, which causes initial irreversibility during the charging and discharging of secondary batteries. Metal-doped silicon oxide-based negative electrode materials improve initial coulombic efficiency by converting lithium oxide-which does not participate in electrochemical reactions-into an irreversible phase. Furthermore, by reducing the size of silicon nanocrystals, they enhance cycle characteristics; additionally, as the matrix transforms into a metal-silicon oxide phase, the silicon nanocrystals exhibit largely uniform characteristics. For example, the size, crystallinity, and stress characteristics of silicon nanocrystals may be significantly improved and made more uniform in a metal-doped silicon oxide matrix compared to a silicon oxide matrix.

In contrast, the negative electrode material for a secondary battery according to the present disclosure offers technical advantages in that the size of the silicon nanocrystals may be controlled to be very small despite the absence of metal doping, and the crystal and stress characteristics may be maintained at a level equivalent to that of a metal-doped silicon oxide matrix. As described above, the FWHM of the Raman peak of the silicon nanocrystals included in the negative electrode material is low, which not only allows the size of the silicon nanocrystals to be precisely controlled to be minute size but also enables the stress applied to the silicon nanocrystals to be uniformly controlled.

In one embodiment, the silicon-based core may have a difference between the maximum and minimum values of the central wavenumber WN(Si) of the Raman peak of the silicon nanocrystals at 10 random and different locations of 10 cm⁻¹ or less, 8 cm⁻¹ or less, 6 cm⁻¹ or less, 5 cm⁻¹ or less, and 1 cm⁻¹ or more, and may be 1 to 10 cm⁻¹, 2 to 8 cm⁻¹, or 2 to 6 cm⁻¹.

In this case, the standard deviation of the maximum and minimum values of the central wavenumber WN(Si) of the Raman peak of the silicon nanocrystals may be 5 cm⁻¹ or less, 3 cm⁻¹ or less, 2 cm⁻¹ or less, 1.5 cm⁻¹ or less, and 0.1 cm⁻¹ or more. Furthermore, the standard deviation may be 0.1 to 5 cm⁻¹, 0.1 to 3 cm⁻¹, 0.1 to 2 cm⁻¹, or 0.1 to 1.5 cm⁻¹.

The fact that the difference between the maximum and minimum values is small indicates that the stress applied to the silicon nanocrystals included in the negative electrode material is nearly constant and uniform. Furthermore, the fact that this difference is small implies that the magnitude of the residual tensile stress in all silicon nanocrystals dispersed in the silicon oxide matrix is substantially the same.

Furthermore, as defined in Equation 1 above, this indicates that most of the silicon nanocrystals dispersed in the silicon oxide matrix possess residual tensile stress. Furthermore, it reveals that the magnitude of the tensile stress remaining in most of the silicon nanocrystals dispersed in the silicon oxide matrix is substantially the same. For example, the ratio of residual tensile stress measured in silicon nanocrystals located at different positions may be 80% or more, 90% or more, or 95% or more; it may also be 90% to 100%, 95% to 100%, or 98% to 100%.

The negative electrode material for a secondary battery according to the present disclosure exhibits uniform electrochemical characteristics at any location within a single negative electrode material particle. Furthermore, since the negative electrode material for a secondary battery exhibits uniform electrochemical properties even among particles of different types, it may demonstrate excellent rate performance. More specifically, the negative electrode material for a secondary battery according to the present disclosure may have an average capacity retention of 90% or more, 91% or more, 93% or more, specifically 95% or more, and more specifically 98% or more, within 3 to 25 charge-discharge cycles.

Furthermore, the initial coulombic efficiency of the negative electrode material according to the present disclosure may be 70% or higher, 73% or higher, or 74% or higher. The initial discharge capacity of the negative electrode material may be 1,300 mAh/g or more, 1,400 mAh/g or more, 1,500 mAh/g or more, 1,600 mAh/g or more, or 1,700 mAh/g or more.

The negative electrode material for a secondary battery according to the present disclosure is provided in a particulate form. Specifically, the negative electrode material may comprise one or more particles selected from primary particles and secondary particles. In other words, the negative electrode material may comprise primary particles, secondary particles, or a mixture of primary and secondary particles. A primary particle may refer to a single particle, while a secondary particle may refer to an aggregate formed by two or more particles.

There is no specific limit on the median particle size (D₅₀) of the negative electrode material. The median particle size(D₅₀) may refer to a volume-based median diameter (D₅₀) calculated using a laser diffraction method. The volume-based D₅₀ refers to a particle size at which a cumulative volume percentage reaches 50% on a distribution curve (cumulative distribution curve) accumulated in the order of particle diameters. Experimentally, cumulative distribution curves, including D₅₀, may be obtained using conventional particle size analyzers that employ laser diffraction or dynamic light scattering methods.

The D₅₀ value of the negative electrode material may be 1 µm to 20 µm, 2 µm to 18 µm, 3 µm to 15 µm, or 5 µm to 15 µm.

In this case, the D₁ particle size of the negative electrode material is 0.5 to 5 µm, 0.8 to 5 µm, 1.5 to 4.5 µm, or 2 to 4 µm. Furthermore, the D₁₀/D₁ ratio of the negative electrode material may be 1 to 3, 1 to 2.5, or 1 to 2.3.

Since the D₁ particle size and the D₁₀/D₁ ratio satisfy the above conditions, a compacted density of an electrode may be enhanced without causing excessive side reactions with an electrolyte, thereby improving the initial coulombic efficiency of the battery and power performance thereof.

Furthermore, the D₉₀ particle size of the negative electrode material may be 8.5 to 25 µm or 9 to 21 µm. The D₉₉/D₉₀ ratio of the negative electrode material may be 1 to 3.5, 1.1 to 3, or 1.2 to 2.1.

Since the D₉₀ particle size and the D₉₉/D₉₀ ratio satisfy the above conditions, an appropriate balance may be achieved between the compacted density of the electrode and expansion thereof. As a result, power performance and cycle life performance of the battery may be improved.

Similar to the definition of the median particle size (D₅₀) of the negative electrode material, the values D₁, D₁₀, D₉₀, and D₉₉ refer to particle sizes at points on a volume-based cumulative distribution curve where cumulative volume percentages are 1%, 10%, 90%, and 99%, respectively.

The negative electrode material described above comprises particles with a relatively uniform particle size distribution. The negative electrode material ensures stable conductivity during formation of a negative electrode material composite layer while reducing a diffusion time of metal ions involved in charge/discharge, such as lithium ions. As a result, the negative electrode material may exhibit improved and more stable charge-discharge cycle performance.

The negative electrode material for a secondary battery according to the present disclosure may be obtained through steps of S1) preparing a silicon-based core and S2) forming a carbon coating layer.

The step S1) of preparing the silicon-based core is not particularly limited to a specific method for producing silicon-based particles used as conventional active materials. For example, the step S1) may involve obtaining and using commercial products of silicon oxide (SiOₓ, where x is a real number greater than 0.1 and less than 2, specifically greater than 0.3 and less than 1.8), or may involve vaporizing Si and SiO₂ to produce the silicon-based core.

Specifically, the step S1) comprises: a) mixing silicon powder (Si) and silicon dioxide powder (SiO₂) to obtain a mixed raw material; b) molding the mixed raw material to form pellets; c) heating and vaporizing the pellets under vacuum conditions to obtain gaseous silicon oxide; and d) condensing the gaseous silicon oxide onto a heated collection plate to obtain the silicon-based core comprising silicon oxide (SiOₓ).

In the step a), a molar ratio of Si:SiO₂ to be mixed is 1:0.1 to 7, 1:0.5 to 5, 1:0.5 to 3, 1:0.7 to 2, or 1:0.9 to 1.5. The mixing may involve homogenizing the mixture after the Si and the SiO₂ are fed into a powder mixer.

The step b) involves pelletizing the mixed raw material; for example, the pelletizing may be performed by molding the mixed raw material in a pellet mold. The step c) involves vaporizing the pellets, wherein a temperature during the heating and vaporization may be 1,000 to 1,700°C, specifically 1,200 to 1,600°C, and more specifically 1,300 to 1,500°C, and the process may be carried out under reduced pressure. The step d) involves condensing the gaseous silicon oxide to obtain particulate silicon oxide, and may be carried out by maintaining a temperature of the collection plate at 300 to 1,200°C, specifically 400 to 1,000°C.

In one embodiment, the step S1) may further include a step of comminuting the silicon-based core obtained after the step d). This grinding process may be performed using a grinding device such as a jet mill, and the ground silicon-based core may be recovered via a cyclone after grinding at high rotational speeds. By appropriately controlling a median particle size (D₅₀) and a particle size distribution of the silicon-based core through the grinding process, it is possible to control a median particle size (D₅₀) and a particle size distribution of the negative electrode material.

The step S2) involves forming a carbon coating layer on the silicon-based core, which is the silicon oxide produced in the step S1).

The step S2) involves: f) mixing a liquid carbon precursor with the silicon oxide obtained in the step S1) to obtain a mixture; and g) carbonizing the mixture.

In the step f), a mixing ratio of the silicon oxide and the liquid carbon precursor is not particularly limited. For example, a weight ratio of the silicon oxide to the liquid carbon precursor may be 20~0.5:1, specifically 15~1:1. The liquid carbon precursor may be a sulfur-containing carbon precursor and, as described above, may be coal tar or petroleum-based residue that is liquid at room temperature. In the step f), a mixing time may be appropriately adjusted in proportion to a volume of the mixture, and the mixing may be performed at a linear velocity of 0.5 to 40 m/s, specifically 0.8 to 30 m/s, but is not limited thereto.

The step g) is a carbonization step, and is not particularly limited to any method capable of carbonizing the liquid carbon precursor to form the carbon coating layer on the silicon-based core. Specifically, the carbonization may be carried out at a temperature of 700 to 1,500°C, specifically 800 to 1,200°C, for 0.5 to 3 hours, specifically 0.6 to 2 hours.

The carbonization in the step g) may be carried out in a multi-stage carbonization process. Specifically, the carbonization may be carried out in n carbonization steps (where n is a natural number greater than 1). In one non-limiting embodiment, when n is 3, the carbonization process may include: heating to reach a first temperature condition, followed by first carbonization under the first temperature condition; heating to reach a second temperature condition, followed by second carbonization under the second temperature condition; and heating to reach a third temperature condition, followed by third carbonization under the third temperature condition. The first to third temperatures may all have different values, or two of them may have the same value, but all three cannot have the same value. The negative electrode material produced in the step g) may be allowed to cool naturally to room temperature (20±5°C).

In one embodiment, the process may further include a step of disintegrating the negative electrode material obtained after step g).

This disintegration may be performed using various mechanical methods; by applying mechanical shear forces within a device such as a pin mill, the thickness and properties of the carbon coating layer may be uniformly controlled, while simultaneously facilitating the adjustment of the median particle size (D₅₀) and particle size distribution of the negative electrode material. The above disintegration step may not be necessary if the content of carbon precursors is low relative to silicon oxide. However, when the content of carbon precursors is higher than that of silicon oxide, performing an additional disintegration step may improve cycle life and capacity retention, making it a desirable approach.

The present disclosure provides a negative electrode comprising the negative electrode material. The negative electrode described above may be a negative electrode for a secondary battery, specifically a negative electrode for a lithium-ion secondary battery. The negative electrode may include a negative electrode mixture layer including the negative electrode material, which is located on at least one surface of a negative electrode current collector.

In one embodiment, the negative electrode mixture layer comprising the negative electrode material may further comprise a carbon-based negative electrode active material. The carbon-based negative electrode active material described above may be one or more selected from the group consisting of synthetic graphite, natural graphite, and hard carbon; however, the present disclosure is not limited thereto.

As an example, a weight ratio of the negative electrode material according to an embodiment included in a negative electrode mixture layer to the carbon-based negative electrode active material may be 1:99 to 99:1, specifically 5:95 to 95:5, more specifically 5:95 to 50:50, and even more specifically 5:95 to 20:80.

The negative electrode for the secondary battery described above may be manufactured by coating and drying a slurry comprising the negative electrode material as described in the above embodiments, a binder, a conductive agent, and a solvent, onto a negative electrode current collector. The method for manufacturing the negative electrode is well known in the art, and any known method for manufacturing a negative electrode may be used without limitation.

Examples of the conductive agent include, but are not limited to, carbon-based materials such as carbon black, ultrafine graphite particles, acetylene black, graphene, carbon nanotubes, or carbon nanofibers.

The binder may be selected from the group consisting of styrene-butadiene rubber (SBR), fluorinated rubber, ethylenepropylene rubber, butyl acrylate rubber, butadiene rubber, isoprene rubber, acrylonitrile rubber, acrylic rubber, silane rubber, polyacrylic acid (PAA), copolymers including acrylic acid structural units, polyvinyl alcohol (PVA), and copolymers including vinyl alcohol structural units. Specifically, the binder may be a copolymer including polyacrylic acid (PAA) or acrylic acid structural units.

The present disclosure provides a secondary battery comprising the negative electrode.

The secondary battery according to one embodiment may be a lithium-ion secondary battery. The lithium-ion secondary battery described above may include a positive electrode, a negative electrode, a separator interposed between the positive electrode and the negative electrode, and an electrolyte.

The positive electrode may include a positive electrode current collector and a positive electrode composite layer disposed on at least one surface of the positive electrode current collector.

The positive electrode composite layer comprises a positive electrode material as a main component thereof. For example, the positive electrode composite layer may include a lithium compound comprising one or more metals selected from the group consisting of Ni, Co, Mn, Al, Cr, Fe, Mg, Sr, V, La, and Ce, and one or more non-metallic elements selected from the group consisting of O, F, S, and P. In addition, the positive electrode composite layer may include positive electrode material particles having a size of 0.01 µm to 200 µm, and the size of the positive electrode material particles may be appropriately selected according to required characteristics of the battery.

The positive electrode may be manufactured by coating and drying a slurry comprising a positive electrode material as described in the above embodiments, a binder, a conductive agent, and a solvent onto a positive electrode current collector. Methods for manufacturing electrodes are well known in this technical field, and any of the disclosed methods may be used without limitation.

Examples of the conductive agent include, but are not limited to, carbon-based conductive materials such as carbon black, ultrafine graphite particles, acetylene black, graphene, carbon nanotubes, or carbon nanofibers, as well as nano-metal particles pastes.

The positive electrode current collector serves to support a positive electrode composite layer. The positive electrode current collector may include, for example, aluminum foil, nickel foil, or a combination thereof, but is not limited thereto.

Any separator that separates the negative electrode and the positive electrode and provides a pathway for lithium-ion migration-provided it is commonly used in secondary batteries-may be used. In other words, a separator that exhibits high lithium mobility with respect to ion migration in the electrolyte and excellent electrolyte retention capacity may be used. The separator may be selected from, for example, glass fiber, polyester, polyethylene, polypropylene, polytetrafluoroethylene, or a combination thereof, and may be in the form of a nonwoven fabric or a microporous membrane. Meanwhile, when a solid electrolyte is used as the electrolyte, a conventional separator is not included, and the solid electrolyte may serve as both the electrolyte and the separator.

A secondary battery may first be assembled into an electrode assembly comprising a positive electrode, a negative electrode, and a separator positioned between the positive electrode and the negative electrode. The electrode assembly is wound or folded and housed in a battery container. The battery container described above may be cylindrical, rectangular, pouch-type, coin-type, or other shapes. Once an electrolytic material is filled into the battery container and the container is sealed, the secondary battery is complete.

The electrolytic material used in the secondary battery is one that conducts active ions-such as lithium ions-involved in the battery's charging and discharging; options include non-aqueous electrolytes or solid electrolytes.

The non-aqueous electrolyte may include lithium salts and organic solvents. Examples of the lithium salts include those with anions such as F⁻, Cl⁻, Br⁻, I⁻, NO₃⁻, N(CN)₂⁻, BF₄⁻, ClO₄⁻, PF₆⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻, and (CF₃CF₂SO₂)₂N⁻.

Any organic solvents commonly used in electrolytes for a secondary battery may be used without restriction; and for example, any one or a combination of two or more selected from the group consisting of propylene carbonate (PC), ethylene carbonate (EC), diethyl carbonate (DEC), dimethyl carbonate (DMC), ethyl methyl carbonate (EMC), methyl propyl carbonate, dipropyl carbonate, dimethyl sulfoxide, acetonitrile, dimethoxyethane, diethoxyethane, vinylene carbonate, sulfolane, gamma-butyrolactone, propylene sulfite, and tetrahydrofuran may be used.

As the solid electrolyte, for example, a gel-type polymer electrolyte in which an electrolyte solution is impregnated into a polymer electrolyte such as polyethylene oxide or polyacrylonitrile, or an inorganic solid electrolyte such as LiI or Li₃N, may be used.

According to an embodiment, the secondary battery may be a half-cell.

The half-cell may be a cell comprising: a positive electrode including a current collector and a positive electrode active material layer disposed on at least one surface of the current collector; a negative electrode comprising a lithium metal foil; a separator interposed between the positive electrode and the negative electrode; and an electrolyte. For example, the electrolyte may be one in which LiPF₆ is dissolved at a concentration of 1 M in a mixed solvent in which ethylene carbonate and diethyl methyl carbonate are mixed at a volume ratio of 1:1.

In addition, the negative electrode material is not limited to lithium secondary batteries, and may also be used as an active material in secondary batteries such as sodium batteries, aluminum batteries, magnesium batteries, calcium batteries, and zinc batteries.

According to another aspect of the present disclosure, there is provided a power source comprising a secondary battery that includes the negative electrode material according to an embodiment. Examples of the power source include, but are not limited to, a battery module, a battery pack, and an energy storage system (ESS).

Hereinafter, the present disclosure will be described in detail with reference to examples. However, the following examples are intended only to illustrate the present disclosure, and the scope of the present disclosure is not limited thereto. The scope of the present disclosure is defined by the appended claims and their equivalents.

### Example 1

### 1) Preparation of silicon oxide (SiOₓ)

Powdered Si and SiO₂ were fed into a powder mixer in a 1:1 molar ratio, mixed thoroughly to produce a raw mixture, and then molded into pellets using a mold.

A 26-kg pellet was placed in a crucible inside a vacuum chamber maintained at 0.1 torr or less, heated to 1,400°C to vaporize the pellet, and then condensed onto a collection plate maintained at 800°C (± 25°C) to obtain solid silicon oxide (SiOₓ). The obtained solid silicon oxide was first coarsely ground in a mill and then finely ground in an air jet mill to produce a fine powder of silicon oxide (SiOₓ) having a median particle size (D₅₀) of 5.6 µm.

### 2) Formation of a carbon coating layer

Coal tar, which is a liquid at room temperature produced during the coking of raw coal in steel mills (specific gravity: 1.1 to 1.3 g/cc; approximately 25% carbon yield upon carbonization at 900°C), was used as a liquid carbon precursor.

Silicon oxide in a fine powder form obtained in step 1) and coal tar were introduced into a planetary mixer maintained at 37°C (±3°C) in a weight ratio of 10:1, and a mixture was prepared by mixing at a linear velocity of 0.6 m/s for 1 hour. Next, 5 kg of the mixture was loaded into a graphite crucible, heated to 900°C under a nitrogen atmosphere, and held at 900°C for 120 minutes. The temperature inside the crucible was then raised again until it reached 930°C, after which it was maintained at 930°C for 30 minutes. The interior of the crucible was then allowed to cool naturally to 900°C, after which the temperature was maintained at 900°C for 30 minutes. The negative electrode material was then allowed to cool naturally to room temperature (20±5°C) to produce a particulate form. A specific surface area (SSA, m²/g) of the negative electrode material was measured using BET analysis based on nitrogen gas adsorption with a specific surface area analyzer (Micromeritics, ASAP 2020 PLUS), and a median particle size(D₅₀) was measured using a laser diffraction particle size analyzer (Microtrac S3500). The results are presented in Table 1 below.

### Example 2

In Example 1 above, a negative electrode material was prepared in the same manner as in Example 1, except that a target temperature of the graphite crucible was varied during the formation of the carbon coating layer in step 2). Specifically, after the mixture was loaded into a graphite crucible and the temperature reached 950°C, it was held at 950°C for 120 minutes. Subsequently, the crucible was heated again to reach 980°C, where it was held for 30 minutes. Finally, the crucible was allowed to cool naturally to 950°C and held at that temperature for 30 minutes.

### Example 3

In Example 1 above, a negative electrode material was prepared in the same manner as in Example 1, except that the target temperature of the graphite crucible was varied during the formation of the carbon coating layer in step 2). Specifically, after heating the graphite crucible including the mixture to 1000°C, the temperature was maintained at 1000°C for 120 minutes; the crucible was then reheated to 1030°C and held at that temperature for 30 minutes; and finally, the interior of the crucible was allowed to cool naturally to 1000°C, and the temperature was maintained at 1000°C for 30 minutes.

### Example 4

A negative electrode material for a secondary battery was prepared in the same manner as in Example 1, except that when the silicon oxide in the fine powder form obtained in step 1) and the coal tar were introduced into a mixer, a mixing weight ratio of the silicon oxide to the coal tar was 5:1.

### Example 5

In Example 4 above, a negative electrode material was prepared in the same manner as in Example 1, except that the manufactured particulate negative electrode material was fed into a supply, classification, and milling machine (ACM) and disintegrated to have a median particle size (D₅₀) of 5.8 um.

### Example 6

A negative electrode material was prepared in the same manner as in Example 1, except that during the formation of the carbon coating layer in step 2), after the graphite crucible including the mixture reached 950°C, the temperature was maintained at 950°C for 40 minutes; subsequently, the temperature inside the crucible was raised again to 980°C and maintained at 980°C for 10 minutes; and finally, the interior of the crucible was allowed to cool naturally to 950°C and maintained at 950°C for 10 minutes.

### Example 7

A negative electrode material was prepared in the same manner as in Example 1, except that the target temperature of the graphite crucible was kept constant during the formation of the carbon coating layer in step 2). Specifically, the graphite crucible including the mixture was heated to 900°C and held at that temperature for 1 hour.

### Comparative Example 1

A negative electrode material was prepared in the same manner as in Example 1, except that in step 2), 50 g of silicon oxide (SiOx) powder was loaded into a thermal CVD apparatus maintained at 900°C, methane and argon were continuously supplied into the apparatus at a flow rate of 1 L/min each, and carbon deposition was performed for 1 hour.

### Comparative Example 2

A negative electrode material was prepared in the same manner as in Example 1, except that in step 2), 50 g of silicon oxide (SiOx) powder was loaded into a thermal CVD apparatus maintained at 950°C, methane and argon were continuously supplied into the apparatus at a flow rate of 1 L/min each, and carbon deposition was performed for 1 hour.

### Comparative Example 2

A negative electrode material was prepared in the same manner as in Comparative Example 1, except that carbon deposition was performed for 3 hours.

**[Table 1]**

| **Sample** | **Carbonization Method** | **Collection plate temp erature (°C)** | **Carbonization Temperature by Step (°C)** | | | **Carboniz ation Time (h)** | **Carbon Content (wt%)** | **Specifi c Surfa ce Area (SSA) (m²/g)** | **PSD (Particle Size Distribution, µm)** | | | | |
|---|---|---|---|---|---|---|---|---|---|---|---|---|---|
| | | | **1st** | **2nd** | **3rd** | | | | **D₁** | **D₁₀** | **D₅₀** | **D₉₀** | **D₉₉** |
| **Example 1** | CT, Multi-stage | 800 | 900 | 930 | 900 | 3 | 2.5 | 1.3 | 1.9 | 2.8 | 5.9 | 9.8 | 13.1 |
| **Example 2** | CT, Multi-stage | 800 | 950 | 980 | 950 | 3 | 2.4 | 1.4 | 2.1 | 3.0 | 6.2 | 11.1 | 15.9 |
| **Example 3** | CT, Multi-stage | 800 | 1000 | 1030 | 1000 | 3 | 2.2 | 1.4 | 2.1 | 3.2 | 6.4 | 12.9 | 27.0 |
| **Example 4** | CT, Multi-stage | 800 | 950 | 980 | 950 | 3 | 4.8 | 1.7 | 3.5 | 4.7 | 10.2 | 19.2 | 33.5 |
| **Example 5** | CT, Multi-stage, Disinte grating | 800 | 950 | 900 | 950 | 3 | 4.7 | 2.0 | 2.1 | 3.3 | 5.0 | 9.6 | 12.0 |
| **Example 6** | CT, Multi-stage | 800 | 950 | 980 | 950 | 1 | 2.6 | 2.2 | 1.5 | 2.8 | 5.7 | 8.7 | 13.8 |
| **Example 7** | CT | 800 | 900 | | | 3 | 2.1 | 3.3 | 2.1 | 3.3 | 5.8 | 9.6 | 12.0 |
| **Comparative Example 1** | CVD | 800 | 900 | | | 1 | 3.7 | 2.3 | 2.7 | 3.9 | 6.5 | 10.6 | 14.0 |
| **Comparative Example 2** | CVD | 800 | 900 | | | 1 | 2.6 | 3.5 | 1.9 | 2.8 | 5.7 | 10.2 | 13.8 |
| **Comparative Example 3** | CVD | 800 | 900 | | | 3 | 3.5 | 4.3 | 2.1 | 3.9 | 6.6 | 11.4 | 15.6 |
| · CT: Carbon coating layer formation through Coal Tar | | | | | | | | | | | | | |
| · CVD: Carbon coating layer formation through Chemical Vapor Deposition (CVD) | | | | | | | | | | | | | |
| · Multi-stage: Carburization involving two or more heat treatment stages | | | | | | | | | | | | | |
| · Disintegrating: Disintegrating using an Air Classifier Mill (ACM) | | | | | | | | | | | | | |

It was confirmed that the negative electrode materials according to the present disclosure generally have a smaller specific surface area than those of the comparative examples; in particular, the negative electrode materials of Examples 1 through 4 were found to have a specific surface area of less than 2 m²/g.

### [Measurement of Properties of Negative Electrode Material]

### 1. Raman spectroscopy

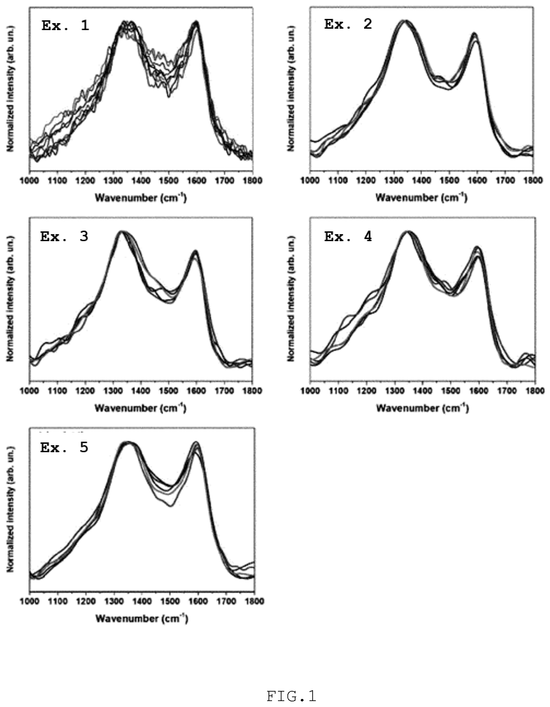

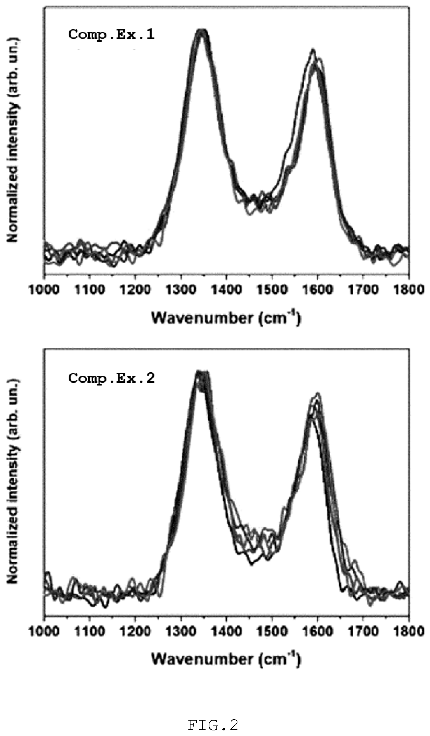

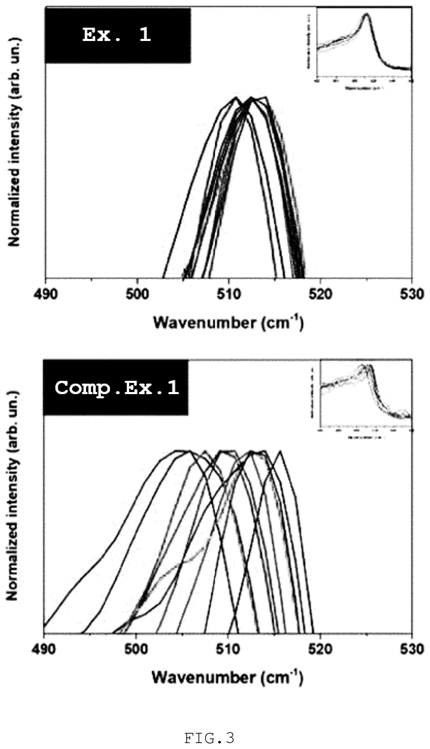

Raman spectra of the negative electrode materials according to the Examples and Comparative Examples were measured at five random and different locations using µ-Raman (XperRam C, Nanobase, Korea) under the following analysis conditions, and the results are shown in FIGS. 1 and 2. Based on the Raman spectra, a D-band peak intensity (I_{D}), a G-band peak intensity (I_{G}), an average value of their intensity ratio (I_{D}/I_{G}), and an average value of a full width at half maximum (FWHM) ratio (F_{D}/F_{G}) of the D-band peak to the G-band peak were calculated and are listed in Table 2 below. In addition, the FWHM of the D-band peak and G-band peak is listed in Table 3. Furthermore, silicon Raman signals of the negative electrode material were measured at five randomly selected locations on the negative electrode material according to the embodiments and comparative examples, and the results are shown in FIG. 3 and Table 4 below.

Analysis conditions: excitation laser wavelength 532 nm, laser power 0.5 mW, spectrometer resolution 1 cm⁻¹, powder-form negative electrode material 1 g, detector exposure time 15 sec.

**[Table 2]**

| **Mean: calculated by Max & Min exclusion** | | **Example** | | | | | | | **Comparative Example** | | |
|---|---|---|---|---|---|---|---|---|---|---|---|
| | | 1 | 2 | 3 | 4 | 5 | 6 | 7 | 1 | 2 | 3 |
| **I_{D}/I_{G}** | Max | 1.07 | 1.18 | 1.21 | 1.23 | 1.08 | 1.21 | 1.17 | 1.24 | 1.20 | 1.21 |
| | Min | 0.96 | 1.11 | 1.17 | 1.16 | 0.99 | 0.98 | 1.02 | 1.11 | 1.08 | 1.10 |
| | Mean | 1.00 | 1.13 | 1.20 | 1.20 | 1.04 | 1.18 | 1.09 | 1.17 | 1.15 | 1.16 |
| | Deviation | 0.03 | 0.03 | 0.02 | 0.03 | 0.03 | 0.03 | 0.03 | 0.04 | 0.03 | 0.03 |
| **F_{D}/F_{G}** | Max | 2.18 | 1.83 | 2.15 | 1.75 | 1.77 | 1.76 | 2.11 | 1.23 | 1.19 | 1.37 |
| | Min | 1.94 | 1.64 | 1.84 | 1.57 | 1.61 | 1.55 | 1.71 | 1.18 | 1.13 | 1.28 |
| | Mean | 2.07 | 1.73 | 1.98 | 1.63 | 1.70 | 1.67 | 1.81 | 1.21 | 1.16 | 1.32 |
| | Deviation | 0.08 | 0.07 | 0.02 | 0.06 | 0.06 | 0.06 | 0.06 | 0.02 | 0.02 | 0.03 |

**[Table 3]**

| **Mean: calculated by Max** & **Min exclusion** | | **Example** | | | | | | | **Comparative Example** | |
|---|---|---|---|---|---|---|---|---|---|---|
| | | 1 | 2 | 3 | 4 | 5 | 6 | 7 | 1 | 2 |
| **D band FWHM (cm⁻¹)** | Mean | 172.8 | 237.5 | 201.8 | 207.68 | 172.9 | 207.99 | 199.5 | 203.7 | 221. 4 |
| **G band FWHM (cm⁻¹)** | Mean | 101.88 | 91.45 | 111.85 | 128.7 | 78.75 | 109.47 | 128.5 | 110.6 | 99.2 |

**[Table 4]**

| **Classification** | **A center wavenumber of a Raman peak(cm⁻¹)** | | | |
|---|---|---|---|---|
| | Max | Min | Mean | Deviation |
| **Example 1** | 514.0 | 510.8 | 512.6 | 1.1 |
| **Example 2** | 513.8 | 509.9 | 511.5 | 1.1 |
| **Example 3** | 514.5 | 510.3 | 512.9 | 1.2 |
| **Example 4** | 515.5 | 511.8 | 513.8 | 1.3 |
| **Example 5** | 514.0 | 508.4 | 511.8 | 1.5 |
| **Example 6** | 515.5 | 511.8 | 513.8 | 1.3 |
| **Example 7** | 516.0 | 509.8 | 511.5 | 1.8 |
| **Comparative Example 1** | 515.7 | 505.4 | 510.5 | 3.5 |
| **Comparative Example 2** | 514.4 | 505.3 | 509.7 | 3.3 |
| **Comparative Example 3** | 513.9 | 505.1 | 509.2 | 3.4 |

Referring to FIGS. 1 and 2 and Tables 2 and 3, it may be confirmed that the negative electrode material according to the embodiment has an intensity ratio (I_{D}/I_{G}) that is, on average, less than a FWHM ratio (F_{D}/F_{G}), and that the average FWHM ratio satisfies 1.3 or greater.

Furthermore, as shown in Table 3 above, the average FWHM (F_{G}) of the G-band peak was found to be 60 cm⁻¹ or more.

Furthermore, referring to FIG. 3 and Table 4 above, it was confirmed that the negative electrode material according to one embodiment satisfies a deviation of less than 3 in the center wavenumber WN(Si) of the Raman peak of the silicon nanocrystals, and a difference of less than 4 between the maximum and minimum values of the center wavenumber WN(Si) of the Raman peak of the silicon nanocrystals. In contrast, the negative electrode material used in the comparative sample exhibited a deviation of 3 or more in the center wavenumber WN(Si) of the silicon nanocrystal Raman peak, and a difference of 10 or more between the maximum and minimum center wavenumbers WN(Si) of the silicon nanocrystal Raman peak, indicating significant non-uniformity.

### 2. Nitrogen adsorption-desorption isotherm

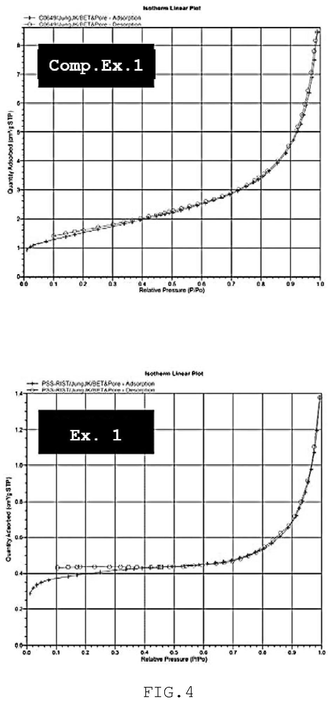

Nitrogen adsorption-desorption isotherms for the silicon-based cores in the examples and comparative examples were obtained using a BET specific surface area analyzer (Micromeritics, ASAP 2020 PLUS). Table 5 and FIG. 4 below show the results of nitrogen adsorption-desorption isotherm measurements for the embodiments and comparative examples.

**[Table 5]**

| **sample** | **BET (m²/g)** | **Nitrogen adsorption-desorption isotherm** |
|---|---|---|
| **Example 1** | 1.492 | Type II |
| **Example 2** | 1.381 | Type II |
| **Example 3** | 2.192 | Type II |
| **Example 4** | 1.507 | Type II |
| **Example 5** | 1.486 | Type II |
| **Example 6** | 1.825 | Type II |
| **Example 7** | 2.072 | Type II |
| **Comparative Example 1** | 5.311 | Type II |
| **Comparative Example 2** | 4.188 | Type II |
| **Comparative Example 3** | 3.723 | Type II |

As shown in Table 5 and FIG. 4 above, the silicon-based core of the embodiment exhibited Type II behavior in the nitrogen adsorption-desorption isotherm graph.

### 3. Infrared Spectroscopy

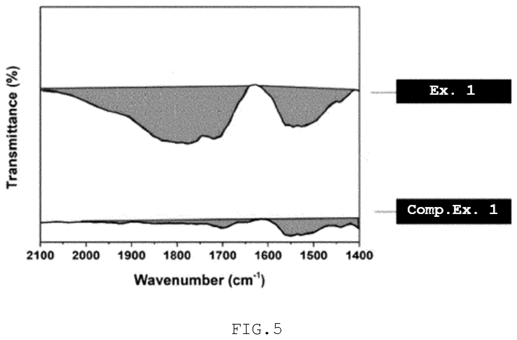

The FTIR spectra of the negative electrode materials according to the above embodiments and comparative examples were measured using Fourier transform infrared spectroscopy (FTIR), and the results are shown in FIG. 5. The ratio (A₂/A₁) of the area (A₁) of the peak of the first wavenumber (n₁) to the area (A₂) of the peak of the second wavenumber (n₂) for each example and comparative example is shown in Table 6 below.

**[Table 6]**

| **Sample** | **Area Ratio (A₂/A₁)** |
|---|---|
| **Example 1** | 2.914 |
| **Example 2** | 2.280 |
| **Example 3** | 2.166 |
| **Example 4** | 3.804 |
| **Example 5** | 3.285 |
| **Example 6** | 2.582 |
| **Example 7** | 3.476 |
| **Comparative Example 1** | 0.537 |
| **Comparative Example 2** | 0.102 |
| **Comparative Example 3** | 1.027 |

In the embodiments, it was confirmed that the area (A₂) is larger than the area (A₁), and that the ratio (A₂/A₁) of the area (A₂) of the peak of the second wavenumber (n₂) to the area (A₁) of the peak of the first wavenumber (n₁) is 2 or more.

### <Manufacture of Secondary Battery>

Using the prepared negative electrode material powder as a negative electrode active material, the negative electrode active material, a conductive material (carbon black), CMC (carboxymethyl cellulose), and SBR (styrene butadiene rubber) were mixed at a weight ratio of 8:1:0.5:0.5 to prepare a slurry. The slurry was coated on a copper foil having a thickness of 17 µm and then dried at 90°C for 40 minutes. After drying, the resulting structure was pressed and punched into a 14-mm-diameter disc to be used as a negative electrode, and a 16-mm-diameter lithium metal disc was used as a counter electrode. With an 18-mm-diameter separator placed between the negative electrode and the counter electrode, a CR2032 coin-type half-cell was manufactured by injecting an electrolyte. The electrolyte was prepared by dissolving 1 M LiPF₆ in a solvent comprising a 1:1 volume mixture of EC (ethylene carbonate) and DEC (diethyl carbonate), to which 3 wt% of FEC (fluoroethylene carbonate) was added as an additive.

### <Evaluation of Battery Performance>

A formation process was performed by charging (lithiation) the secondary battery at a constant current of 0.1 C until a voltage reached 0.005 V, followed by constant-voltage charging at 0.005 V until a current reached 0.01 C, and then discharging (de-lithiation) at a constant current of 0.1 C until the voltage reached 1.5 V (first formation step). Subsequently, the secondary battery was charged (lithiation) at a constant current of 0.1 C until 0.005 V, charged at a constant voltage of 0.005 V until 0.01 C was reached, and then discharged (de-lithiation) at a constant current of 0.1 C until 1.0 V (second formation step).

The half-cells that had undergone the formation process were charged (lithiation) to 0.005 V at a constant current of 0.5 C, charged at a constant voltage of 0.005 V until reaching 0.05 C, and finally discharged (de-lithiation) to 1.0 V at a constant current of 0.5 C to evaluate charge-discharge cycle characteristics and a capacity retention after a total of 30 charge-discharge cycles. A discharge capacity (initial capacity) and an initial coulombic efficiency of the first charge-discharge cycle were measured and are presented in Table 7 below. The capacity retention ((C₂₅/C₃) x 100, where C₂₅ is a discharge capacity at the 25th charge-discharge cycle and C₃ is a discharge capacity at the 3rd charge-discharge cycle) is also presented in Table 7 below.

**[Table 7]**

| Sample | Electrochemical Properties of Cell | | |
|---|---|---|---|
| | Discharge capacity (mAh/g) | Initial Coulombic Efficiency (ICE, %) | Capacity Retention (%) |
| Example 1 | 1,702 | 73.9 | 97.3 |
| Example 2 | 1,730 | 74.1 | 99.6 |
| Example 3 | 1,706 | 74.3 | 91.4 |
| Example 4 | 1,678 | 75.1 | 94.5 |
| Example 5 | 1,730 | 74.7 | 99.9 |
| Example 6 | 1,645 | 76.1 | 99.9 |
| Example 7 | 1,644 | 74.3 | 92.1 |
| Comparative Example 1 | 1,643 | 73.7 | 89.1 |
| Comparative Example 2 | 1,651 | 73.9 | 85.7 |
| Comparative Example 3 | 1,681 | 74.4 | 89.0 |

It was confirmed that the negative electrode materials according to the embodiments generally exhibit significantly superior electrochemical characteristics compared to the comparative examples, showing a discharge capacity of 1,700 mAh/g or higher, an initial coulombic efficiency of 74% or higher, and a capacity retention of 92% or higher.

As described above, the present disclosure has been described with reference to specific details, limited examples, and drawings. These are provided solely to aid in a more general understanding of the present disclosure, and the present disclosure is not limited to the above embodiments. A person of ordinary skill in the art to which the present disclosure pertains would be able to make various modifications and variations based on this description.

## Claims

1. A negative electrode material for a secondary battery, comprising: a silicon-based core; and
a carbon coating layer disposed on a surface of the silicon-based core,
wherein an intensity ratio (I_{D}/I_{G}) of a D-band peak to a G-band peak in a Raman spectrum is less than a full width at half maximum (FWHM) ratio (F_{D}/F_{G}) of the D-band peak to the G-band peak,
wherein the FWHM ratio (F_{D}/F_{G}) is 1.3 or more, and
wherein the silicon-based core exhibits Type II behavior in a nitrogen adsorption-desorption isotherm graph.

2. The negative electrode material for a secondary battery according to claim 1, wherein an area (A₁) of a peak of a first wavenumber (n₁) in a range of 1400 to 1625±5 cm⁻¹ in an infrared spectrum of the negative electrode material is smaller than an area (A₂) of a peak of a second wavenumber (n₂) in a range of 1625±5 to 2100 cm⁻¹.

3. The negative electrode material for a secondary battery according to claim 2, wherein a ratio (A₂/A₁) of the area (A₂) of the peak of the second wavenumber (n₂) to the area (A₁) of the peak of the first wavenumber (n₁) is 2 or more.

4. The negative electrode material for a secondary battery according to claim 1, wherein the intensity ratio (I_{D}/I_{G}) is less than 1.3.

5. The negative electrode material for a secondary battery according to claim 1, wherein the FWHM (F_{G}) of the G-band peak is 60 cm⁻¹ or more.

6. The negative electrode material for a secondary battery according to claim 1, wherein the silicon-based core comprises a matrix comprising silicon oxide; and silicon nanocrystals dispersedly embedded in the matrix.

7. The negative electrode material for a secondary battery according to claim 6, wherein the negative electrode material satisfies the following Equation 1 based on a silicon Raman signal: $1 > WN \left(Si\right) / WN \left(ref\right)$ wherein, in Equation 1, WN(ref) is a center wavenumber of a Raman peak of bulk single-crystal silicon, and WN(Si) is a center wavenumber of a Raman peak of the silicon nanocrystals included in the negative electrode material.

8. The negative electrode material for a secondary battery according to claim 7, wherein a full width at half maximum (FWHM) of a silicon Raman peak of the nanocrystals included in the negative electrode material is larger than an FWHM of the Raman peak of the bulk single-crystal silicon.

9. The negative electrode material for a secondary battery according to claim 7, wherein a full width at half maximum (FWHM) of a Raman peak of nanoparticulate-phase silicon included in the negative electrode material is 4 to 20 cm⁻¹.

10. The negative electrode material for a secondary battery according to claim 7, wherein, in the silicon-based core, a difference between a maximum value and a minimum value of the center wavenumber WN(Si) of the Raman peak of the silicon nanocrystals at 10 random and different locations is 5 cm⁻¹ or less.

11. The negative electrode material for a secondary battery according to claim 1, wherein a specific surface area of the negative electrode material is 10 m²/g or less.

12. The negative electrode material for a secondary battery according to claim 1, wherein the FWHM ratio (F_{D}/F_{G}) is 1.5 or more.

13. The negative electrode material for a secondary battery according to claim 1, wherein the carbon coating layer comprises a plurality of carbon nanoparticles.

14. The negative electrode material for a secondary battery according to claim 13, wherein the carbon coating layer comprises a dispersed phase comprising a plurality of carbon nanoparticles; and a continuous phase consisting of carbon and physically binding the dispersed phase.

15. The negative electrode material for a secondary battery according to claim 1, wherein the carbon coating layer is included in an amount of 0.5 to 8 wt% based on a total weight of the negative electrode material.

16. The negative electrode material for a secondary battery according to claim 1, wherein the carbon coating layer is derived from coal tar or petroleum-based residue.

17. The negative electrode material for a secondary battery according to claim 1, wherein a D₁ particle size of the negative electrode material is 0.8 to 5 µm, and D₁₀/D₁ is 1 to 3.

18. The negative electrode material for a secondary battery according to claim 1, wherein a D₉₀ particle size of the negative electrode material is 8.5 to 25 µm, and D₉₉/D₉₀ is 1.1 to 3.

19. A secondary battery comprising the negative electrode material for a secondary battery according to any one of claims 1 to 18.
